(19) Europäisches Patentamt
European Patent Office
Office européen des brevets

(11) Publication number: **0 431 428 A2**

# (12) EUROPEAN PATENT APPLICATION

(21) Application number: **90122482.4**

(22) Date of filing: **26.11.90**

(51) Int. Cl.5: **C08G 18/10**, C08G 18/48, C08G 18/76

(30) Priority: **06.12.89 US 446846**

(43) Date of publication of application: **12.06.91 Bulletin 91/24**

(84) Designated Contracting States: **AT BE CH DE DK ES FR GB IT LI NL SE**

(71) Applicant: **BASF Corporation**
**9 Campus Drive**
**Parsippany, NJ 07054(US)**

(72) Inventor: **Narayan, Thirumurti**
**8800 Sarah Lane**
**Grosse Ile, Michigan 48138(US)**

(74) Representative: **Mutzbauer, Helmut, Dr. et al**
**BASF Aktiengesellschaft Patentabteilung**
**ZSP-C 6 Carl-Bosch-Strasse 38**
**W-6700 Ludwigshafen(DE)**

## (54) New Prepolymer compositions derived from liquid methylene bis (phenyl-isocyanate) and polytetramethylene ether glycol.

(57) The present invention is a prepolymer or quasi polymer formed from the reaction of a given amount of a diphenyl methane diisocyanate having at least 5 percent of the 2,4'-isomer and polytetramethylene ether glycols having a molecular weight between 150 and 3000. The glycol which may be combined with other polyether or polyester glycols. The resulting NCO-terminated prepolymer or quasi polymer is a liquid which is stable at temperature of 15° C for at least 24 hours.

EP 0 431 428 A2

# NEW PREPOLYMER COMPOSITIONS DERIVED FROM LIQUID METHYLENE BIS (PHENYLISOCYANATE) AND POLYTETRAMETHYLENE ETHER GLYCOL

The present invention pertains to prepolymers and quasi-prepolymers for use in the preparation of coatings, sealants, etc. More particularly, the present invention concerns prepolymers and quasi-prepolymers useful in the preparation of polyurethane coatings and sealants. Even more particularly, the present invention relates to new prepolymer and quasi-prepolymer compositions derived from 2,4'-,4,4'-methylene bis(phenylisocyanate) and polytetramethylene ether glycols of various molecular weights, which are liquid at temperatures of -20° C to 15° C.

Numerous prepolymer and quasi-prepolymer compositions are known for use in the manufacture of polyurethane coatings, sealants, etc., as well as other polymeric compounds.

Generally, the most important diisocyanates which are readily available on a large commercial scale are the 4,4' diphenylmethane diisocyanate and the 2,4'-isomer which melt at 39° C and 34.5° C respectively. The liquid form of diisocyanate is highly useful and attempts have been made to liquify both the 4,4'-diphenylmethane diisocyanate and a mixture of the 4,4'-diphenyl methane diisocyanate and a small amount of the 2,4'-isomer. The serious drawback to these compositions is that the adducts crystalize anywhere from 5° C to as high as 25° C.

Diisocyanate compounds which are the reaction products of a diphenylmethane diisocyanate containing at least 15% by weight of the 2,4'-isomer with either propylene glycol or a poly-1,2-propylene ether glycol are taught in U.S. Patent No. 4,118,411. These diisocyanate compounds are stable and liquid at -22° C for 12 weeks.

U.S. Patent No. 4,115,429 to Reiff et al discloses novel prepolymers and quasi-prepolymers stable at low temperatures which are derived from the reaction of methylene bis(phenylisocyanate) having at least 20 percent by weight up to 70 percent by weight of 2,4'MDI content with polyoxyethylene glycols having molecular weights of from 150 to 1500.

It is to be appreciated, however, that there still exists a need for other prepolymers and quasi-prepolymers which exhibit low temperature stability and which are useful in the preparation of elastomers, coatings, sealants, foams and the like having better end use properties than those based on either polyethylene glycol or polypropylene glycol.

The present invention provides liquid, low temperature stable prepolymers and quasi-prepolymers which are derived from the reaction of (a) methylene bis(phenylisocyanate) containing at least 5 percent by weight of 2,4'-methylene bis(phenylisocyanate) and (b) a polytetramethylene ether glycol, to provide NCO-terminated prepolymers and quasi-prepolymers having from about 5 to about 90 percent, by weight, 2,4'-methylene bis(phenylisocyanate).

The polytetramethylene ether glycol hereof includes polytetramethylene ether glycols ranging in molecular weight from 150 to 3000 as well as mixtures thereof.

Likewise, blends of the polytetramethylene ether glycol and other polyether polyols and/or polyester polyols can be used.

The process for preparing the prepolymer or quasi prepolymer hereof, generally, comprises the steps of (a) heating the monomeric methylene bis(phenylisocyanate) to a temperature of about 60° C, (b) adding the polytetramethylene ether glycol to the polyisocyanate at a constant rate over a period of about one hour, and (c) heating the reactants for one to two hours at 80° C.

The NCO content of the new prepolymer/quasi-prepolymer compositions of the present invention range from 0.5 percent by weight to 33.0 percent by weight.

The prepolymer and quasi-prepolymer products are useful "as is" or together with other components such as chain extenders, catalysts, blowing agents, fillers, and solvents in the formation of polyurethane elastomers, sealants, film and the like.

For a more complete understanding of the present invention reference is made to the following detailed description and accompanying examples.

As hereinabove noted, the present invention provides novel quasi-prepolymer and prepolymers which are liquid at low temperatures. The present compositions are the reaction product of methylene bis-(phenylisocyanate) and polytetramethylene ether glycol. Such prepolymers and quasi-prepolymers utilising the polytetramethylene ether glycols in combination with the monomeric methylene bis(phenylisocyanate) mixture contain at least 5 percent by weight of 2,4'-methylene bis(phenylisocyanate) and, preferably, up to 60 percent, by weight. The present invention is, therefore, directed to novel diisocyanate compounds which comprise the reaction product of a bis(phenylisocyanate) containing at least 5 percent by weight of the 2,4'-isomer with polytetramethylene ether glycol.

The present invention defines a diisocynate prepolymer which is liquid at room temperature (25 ° C) and below to a temperature of -20 ° C. The composition comprises a methylene bis (phenylisocyanate) containing as little as about 5 % by weight of the 2,4' isomer; and a polytetramethylene ether glycol having a molecular weight of from 150 to 3000. The achievement of a liquid diisocynate using the 2,4'-isomer in quantities smaller than 15% by weight is an unexpected result. Further, the formulation of the 2,4'-isomer of diisocyanate in combination with a polytetramethylene ether glycol to form a liquid diphenylmethane diisocyanate, is novel in the art, as mixtures of diphenylmethane diisocyanate containing the 2.4' isomer in combination with polytetramethylene ether glycols are not taught in the prior art.

The prepolymer is an advancement in the art, as the resulting prepolymer products can be transported and stored at lower temperatures than previously possible. Also, even if the prepolymers are frozen they will thaw readily at room temperature, without additional heating.

The prepolymer, generally, contains from about 10 to 90 percent by weight of the diisocyanate and from about 90 to 10 percent by weight of the glycol and, preferably, from about 10 to 60 percent by weight of the diisocyanate and from about 90 to 40 percent, by weight, of the glycol.

In general, the methylene bis(phenylisocyanate) compounds usable according to the instant invention must contain at least 5 percent by weight of the 2,4'-isomer of methylene bis(phenylisocyanate). Theoretically there is no upper limit to the amount of 2,4'-isomer which could be present in the isocyanate, but is generally present in levels up to about 90 percent. Higher levels of the 2,4' isomer are desirable as the increased 2,4' isomer concentration lowers the melting point of the isocyanate and improves certain end product properties. It has been found that products of the present invention containing the 2,4' isomer are both stable and liquid at 15 ° C for at least 24 hours. Products containing 50 percent by weight of the 2,4' isomer are both stable and liquid at -20 ° C for at least 24 hours. Accordingly, the methylene bis-(phenylisocyanate) products used in the present invention will, generally, contain from about 5 percent to about 60 percent by weight of the 2,4'-isomer with the balance being the 4,4'-isomer and 2,2'-isomer and/or various MDI oligomers (the 2,2'-isomer and any dimer are generally present only in trace amounts). Preferably, the 2,4'-isomer content is from about 30 to about 60 percent by weight and most preferably from about 40 to about 50 percent by weight.

The polyol component used to prepare the NCO-terminated prepolymers and/or quasi-prepolymers is a polytetramethylene ether glycol ranging in molecular weight from 150 to 3000 and preferably from about 150 to about 2000. The glycol is a commercially available product sold by BASF Corporation under the name POLYTHF$^R$.

The polytetramethylene ether glycol may be used alone or as a mixture of such varying molecular weight glycols. Likewise, the glycol may be used as a blend thereof with a polyether glycol or a polyester glycol.

Suitable polyether polyols are those prepared by the oxyalkylation of a dihydric alcohol such as ethylene glycol, propylene glycol, butylene glycol, neopentyl glycol, 1,6-hexane diol, hydroquinone, resorcinol, the bisphenols, aniline and other aromatic monoamines, aliphatic monoamines and monoesters of glycerine with ethylene oxide, propylene oxide, butylene oxide and the like. The oxyalkylation of such dihydric alcohols is, of course, well known.

Polyester polyols are those which are conventionally employed in the art and which comprise the reaction product of a polycarboxylic acid with an excess of polyol. As noted, these polyester glycols are well known and commercially available.

Where a blend is used, generally, it will contain from about 95 to 5 percent by weight of the polytetramethylene ether glycol and from about 5 to 95 percent, by weight, of the polyether polyol. Preferably, the blend will contain from about 80 to about 10 percent, by weight, of the polytetramethylene ether glycol and from about 10 to 80 percent by weight of the polyether glycol.

In preparing the prepolymers and quasi-prepolymers hereof the materials are reacted in an NCO/OH ratio of about 1.1 to about 100 and preferably from about 1.5 to about 80.

The glycol and isocyanate can be reacted at temperatures ranging anywhere from 25 ° C up to 100 ° C. Preferably, the reaction temperature is from about 40 ° C to about 90 ° C and most preferably, from about 60 ° C to about 80 ° C. The reaction time ranges from 1 to 10 hours, and preferably from 1 to 2 hours.

The isocyanate content of the products of the process generally amounts to from as low as 70 percent to as high as about 90 percent. The final product having an NCO-content of from about 0.50 to about 33.0 percent by weight.

Viscosity of the resulting prepolymer or quasi polymer is dependent upon the amount of 2,4'-isomer present in the reaction. The greater the concentration of the 2,4'-diisocyanate present, the higher the viscosity of the resulting product.

The products of the process can be used "as is" for all types of different polyaddition reactions in the

plastics industries, and may be reacted with chain extenders, catalysts, solvents and the like in flexible polyurethane polymers are desired, such as polyurethane elastomers, sealants, films and the like.

In preparing polyurethane polymers, the NCO-terminated prepolymers may be reacted, alone, or with another isocyanate and a polyhydric compound according to conventional polyurethane technology, in the presence of catalysts, chain extenders, etc. and the like.

By the term "polyurethane" is meant a polymer whose structure contains predominantly urethane

$$-\!\!\left(-NH-\overset{\overset{O}{\|}}{C}-O-\right)\!\!-$$

linkages between repeating units. Such linkages are formed by the addition reaction between an organic isocyanate group R{NCO} and an organic hydroxyl group [HO]-R. In order to form a polymer, the organic isocyanate and hydroxyl group-containing compounds must be at least difunctional. However, as modernly understood, the term "polyurethane" is not limited to those polymers containing only urethane linkages, but includes polymers containing allophanate, biuret, carbodiimide, oxazolinyl, isocyanurate, uretidinedione, and urea linkages in addition to urethane. The reactions of isocyanates which lead to these types of linkages are summarized in the Polyurethane Handbook, Gunter Vertel, Ed., Hanser Publications, Munich, c1985, in Chapter 2, pages 7-41; and in Polyurethanes: Chemistry and Technology, J.H. Saunders and K.C. Frisch, Interscience Publishers, New York, 1963, Chapter III, pages 63-118. In addition to polyols (polyhydroxyl-containing monomers), the most common isocyanate-reactive monomers are amines and alkanolamines. In these cases, reaction of the amino group leads to urea linkages interspersed within the polyurethane structure.

The urethane forming reaction is generally catalyzed. Catalysts useful are well known to those skilled in the art, and many examples may be found for example, in the Polyurethane Handbook, Chapter 3, Section 3.4.1 on pages 90-95; and in Polyurethanes: Chemistry and Technology in Chapter IV, pages 129-217. Most commonly utilized catalysts are tertiary amines and organotin compounds, particularly dibutyltin diacetate and dibutyltin dilaurate. Combinations of catalysts are often useful also.

In the preparation of polyurethanes, the isocyanate is reacted with the active hydrogen-containing compound(s) in an isocyanate to active hydrogen ratio of from 0.5 to 1 to 10 to 1. The "index" of the composition is defined as the -NCO/active hydrogen ratio multiplied by 100. While the extremely large range described previously may be utilized, most polyurethane processes have indices of from 90 to about 120 or 130, and more preferably from 95 to about 100. In the case of polyurethanes which also contain significant quantities of isocyanurate groups, indices of greater then 200 and preferably greater than 300 may be used in conjunction with a trimerization catalyst in addition to the usual polyurethane catalysts. In calculating the quantity of active hydrogens present, in general all active hydrogen containing compounds other then non-dissolving solids are taken into account. Thus the total is inclusive of polyols, chain extenders, functional plasticizers, etc.

Hydroxyl group-containing compounds (polyols) useful in the preparation of polyurethanes are described in the Polyurethane Handbook in Chapter 3, Section 3.1 pages 42-61; and in Polyurethanes: Chemistry and Technology in Chapter II, Sections III and IV, pages 32-47. Many hydroxyl-group containing compounds may be used, including simple aliphatic glycols, dihydroxy aromatics, bisphenols, and hydroxy-terminated polyethers, polyesters, and polyacetals, among others. Extensive lists of suitable polyols may be found in the above references and in many patents, for example in columns 2 and 3 of U.S. Patent No. 3,652,639; columns 2-6 of U.S. Patent No. 4,421,872; and columns 4-6 of U.S. Patent No. 4,310,632; these three patents being hereby incorporated by reference.

Preferably used are hydroxyl-terminated polyoxy-alkylene and polyester polyols. The former are generally prepared by well known methods, for example by the base catalyzed addition of an alkylene oxide, preferably ethylene oxide (oxirane), propylene oxide (methyloxirane) or butylene oxide (ethyloxirane) to an initiator molecule containing on the average two or more active hydrogens. Example of preferred initiator molecules are dihydric initiators such as ethylene glycol, propylene glycol, butylene glycol, neopentyl glycol, 1,6-hexanediol, hydroquinone, resorcinol, the bisphenols, aniline and other aromatic monoamines, aliphatic monoamines, and monoesters of glycerine; trihydric initiators such as glycerine, trimethylolpropane, trimethylolethane, N-alkyl-phenylenediamines, mono-, di-, and trialkanolamines; tetrahydric initiators such as ethylene diamine, propylenediamine, 2,4'-, 2,2'-, and 4,4'-methylenedianiline, toluenediamine, and pentaerythritol; pentahydric initiators such as diethylene-triamine; and hexahydric and octahydric initiators such as sorbitol and sucrose.

Addition of alkylene oxide to the initiator molecules may take place simultaneously or sequentially when more than one alkylene oxide is used, resulting in block, heteric, and block-heteric polyoxyalkylene polyethers. The number of hydroxyl groups will generally equal the number of active hydrogens in the initiator molecule. Processes for preparing such polyethers are described both in the Polyurethane Handbook and Polyurethanes: Chemistry and technology as well as in many patents, for example U.S. Patent Nos. 1,922,451; 2,674,619; 1,922,459; 3,190,927; and 3,346,557.

Polyester polyols also present preferred polyurethane-forming reactants. Such polyesters are well known in the art and are prepared simply by polymerizing polycarboxylic acids or their derivatives, for example their acid chlorides or anhydrides, with a polyol. Numerous polycarboxylic acids are suitable, for example malonic acid, citric acid, succinic acid, glutaric acid, adipic acid, pimelic acid, azelaic acid, sebacic acid, maleic acid, fumaric acid, terephthalic acid, and phthalic acid. Numerous polyols are suitable, for example the various aliphatic glycols, trimethylolpropane and trimethylolethane, 2-methylglucoside, and sorbitol. Also suitable are low molecular weight polyoxyalkylene glycols such as polyoxyethylene glycol, polyoxypropylene glycol, and block and heteric polyoxyethylene-polyoxypropylene glycols. These lists of dicarboxylic acids and polyols are illustrative only, and not limiting. An excess of polyol should be used to ensure hydroxyl termination, although carboxy groups are also reactive with isocyanates. Methods of preparation of such polyester polyols are given in the Polyurethane Handbook and in Polyurethanes: Chemistry and Technology.

Also suitable as the polyol are polymer modified polyols, in particular the so-called graft polyols. Graft polyols are well known to the art, and are prepared by the in situ polymerization of one or more vinyl monomers, preferably acrylonitrile and styrene, in the presence of a polyether or polyester polyol, particularly polyols containing a minor amount of natural or induced unsaturation. Methods of preparing such graft polyols may be found in columns 1-5 and in the Examples of U.S. Patent No. 3,652,639; in columns 1-6 and the Examples of U.S. Patent No. 3,828,201; particularly in columns 2-8 and the Examples of U.S. Patent No. 4,690,956; and in U.S. Patent No. 4,524,157; all of which patents are herein incorporated by reference.

Non-graft polymer modified polyols are also preferred, for example those prepared by the reaction of a polyisocyanate with an alkanolamine in the presence of a polyol as taught by U.S. Patent Nos. 4,293,470; 4,296,213; and 4,374,209; dispersions cf polyisocyanurates containing pendant urea groups as taught by U.S. Patent No. 4,386,167; and polyisocyanurate dispersion also containing biuret linkages as taught by U.S. Patent No. 4,359,541. Other polymer modified polyols may be prepared by the in situ size reduction of polymers until the particle size is less than 20 um, preferably less than 10 um.

Also useful in preparing polyurethanes are monomers containing other functional groups which are reactive with isocyanates. Examples of these are preferably the amines, for example the substituted and unsubstituted toluenediamines and methylenedianilines; the alkanolamines; the amino-terminated polyoxyalkylene polyethers; and sulfhydryl terminated polymers, to name but a few. The alkanolamines and amines, particularly diamines, are particularly useful, as the amino group reacts faster than the hydroxyl group and thus these molecules can act as isocyanate chain extenders in situ without the need to prepare prepolymers. Examples of hindered, alkyl substituted aromatic diamines which are particularly useful are disclosed in U.S. Patent No. 4,218,543.

Chain extenders may also be useful in the preparation of polyurethanes. Chain extenders are generally considered to be low molecular weight polyfunctional compounds or oligomers reactive with the isocyanate group. Aliphatic glycol chain extenders commonly used include ethylene glycol, propylene glycol, 1,4-butanediol, and 1,6-hexanediol. Amine chain extenders include aliphatic monoamines but especially diamines such as ethylenediamine and in particular the aromatic diamines such as the toluenediamines and the alkylsubstituted (hindered) toluenediamines

Other additives and auxiliaries are commonly used in polyurethanes. These additives include plasticizers, flow control agents, fillers, antioxidants, flame retardants, pigments, dyes, mold release agents, and the like. Many such additives and auxiliary materials are discussed in the Polyurethane Handbook in Chapter 3, Section 3.4, pages 9-109; and in Polyurethanes: Chemistry and Technology, Part II, Technology.

In practicing a polyurethane elastomer in accordance herewith, preferably, the prepolymer hereof is reacted, alone, or with an additional polyisocyanate.

Where an additional polyisocyanate is used, the prepolymer is employed in an amount ranging from about 10 to 90 percent, by weight, and the additional polyisocyanate is present in an amount ranging from about 90 to 10, percent, by weight. Preferably, the prepolymer will be present in an amount ranging from about 30 to about 60 percent, by weight and the additional polyisocyanate will be present in an amount ranging from about 60 to 30 percent, by weight.

Although any of the above-enumerated polyisocyanates can be used, it is preferred that the additional

polyisocyanate be toluene diisocyanate and polymethylene polyphenyl isocyanate, and isocyanates of the aliphatic class.

In forming the polyurethane, the isocyanate is, ordinarily, reacted with a polytetramethylene ether glycol, or a polyether polyol. The components are reacted in stoichiometric quantities to provide the final product. The chain extenders, catalysts, etc. are employed in conventional amounts.

For a more complete understanding of the present invention, following are specific illustrative examples showing the preparation of various prepolymers in accordance with the present invention. In the examples all parts are by weight absent contrary indications.

EXAMPLES I-VII

These examples illustrate the preparation of a quasi-prepolymer in accordance with the present invention.

Into a suitable reaction vessel equipped with an addition funnel, an inlet for $N_2$ gas, heating means for maintaining the vessel at 60° and a stirrer, was charged a quantity of methylene bis(phenylisocyanate). With stirring the glycol was added thereto at a constant rate over a period of one hour, with the temperature being held at 60° C. The reaction mixture was, then, heated to a temperature of about 80° C for one to two hours. The product was then characterized by the determination of NCO content and viscosity. Table I set forth below sets forth the ingredients and their amounts used to prepare the quasi-prepolymers.

ELASTOMER FROM THE PREPOLYMERS OF THE PRESENT INVENTION

The prepolymer of Example 7 (93.3 parts) was placed in a container and heated to 60C. Thereafter 6.7 grams of 1,4-butanediol (isocyanate index 105) was added and mixed. An exothem to 80C was observed. The contents were mixed thoroughly, degassed and cast into a open mold preheated to 120C. The mold was placed in the oven for six minutes at 120C and the elastomer was obtained.

TABLE I

| | Isocyanate(1) Parts | Polytetramethylene Glycol Type | Polytetramethylene Glycol Amount | Dipropylene Glycol | P-410(6) | % NCO | Visc.(7) cps. 25°C |
|---|---|---|---|---|---|---|---|
| Example 1 | 77.48 | A(2) | 22.52 | - | -- | 22.8 | 291 |
| Example 2 | 84.38 | B(3) | 15.62 | -- | -- | 22.7 | 434 |
| Example 3 | 75.11 | C(4) | 24.89 | -- | -- | 22.9 | 245 |
| Example 4 | 72.35 | D(5) | 27.66 | -- | -- | 22.6 | 407 |
| Example 5 | 87.21 | B(3) | 6.39 | 6.39 | -- | 22.6 | 945 |
| Example 6 | 82.81 | B(3) | 8.59 | -- | 8.60 | 22.8 | 367 |
| Example 7 | 43.50 | A(2) | 56.5 | -- | -- | 7.0 | |

(1) a 50/50 isomeric blend of 2,4' and 4,4'-methylene bis(phenylisocyanate).

(2) a 650 molecular weight polytetramethylene glycol

(3) a 250 molecular weight polytetramethylene glycol

(4) a 1000 molecular weight polytetramethylene glycol

(5) a 2000 molecular weight polytetramethylene glycol

(6) a propylene oxide adduct of propylene glycol having a molecular weight of 430 sold by BASF Corp.

(7) as determined by Brookfield Viscometer

As shown in Table I, the viscosity increased significantly when higher proportions of the diisocyanate were used.

## Claims

1. A prepolymer, which is liquid at temperatures ranging from about -20 ° C to about 25 ° C, comprising the

reaction product of:

a) a methylene bis(phenylisocyanate) containing at least about five percent by weight of the 2,4'-isomer; and

b) a polytetramethylene ether glycol having a molecular weight from about 150 to about 3000.

**2.** The prepolymer of Claim 1 wherein the methylene bis(phenylisocyanate) comprises:

a) from about 5 to about 60 percent by weight of the 2,4'-isomer in the isocyanate.

b) from about 95 to about 40 percent by weight of the 4,4'-isomer.

**3.** The prepolymer of Claim 2 wherein the methylene bis(phenylisocyanate) comprises:

a) from about 40 to about 50 percent by weight of the 2,4'-isomer, and

b) from about 60 to about 40 percent by weight of the 4,4'-isomer.

**4.** The prepolymer of Claim 1 wherein the prepolymer has an NCO-content of from about 0.5 percent by weight to about 33 percent by weight.

**5.** The prepolymer of Claim 1 wherein

a) the diisocyanate is present in an amount ranging from about 10 to about 90 percent, by weight; and

b) the polytetramethylene ether glycol is present in an amount ranging from about 90 to about 10 percent, by weight.

**6.** The prepolymer of Claim 1 which further comprises: a second polyol which is selected from the group consisting of a polyether polyol, a polyester polyol and mixtures thereof.

**7.** The prepolymer of Claim 6 wherein the second polyol is present in an amount ranging from about 5 to about 95 percent, by weight, based on the total weight of the prepolymer.

**8.** A process for the production of a prepolymer which comprises:

1) reacting together, at a temperature ranging from about 25 °C to about 90 °C, a diphenyl methane diisocyanate containing at least 5 percent by weight of the 2,4'-isomer thereof; and

2) a polytetramethylene glycol having a molecular weight ranging from about 150 to about 3000.

**9.** The process of Claim 8 which further comprises reacting the polytetramethylene ether glycol as a blend with a second polyol selected from the group consisting of a polyether polyol, a polyester polyol and mixtures thereof.

**10.** The process of Claim 9 wherein

a) the diisocyanate is present in an amount ranging from about 10 to about 90 percent, by weight, based on the total weight, and

b) the blend is present in an amount ranging from about 90 to about 10 percent, by weight, based on the total weight.

**11.** The process of Claim 8 wherein

a) the diisocyanate is present in an amount ranging from about 30 to about 60 percent, by weight, based on the total weight, and

b) the polytetramethylene ether glycol is present in an amount ranging from about 70 to about 40 percent, by weight, based on the total weight.